Europäisches Patentamt

European Patent Office

Office européen des brevets

(19)

(11)  **EP 1 100 674 B1**

(12)  # EUROPEAN PATENT SPECIFICATION

(45) Date of publication and mention
of the grant of the patent:
**02.04.2003   Bulletin 2003/14**

(51) Int Cl.7: **B29C 70/48**, C08G 61/12

(86) International application number:
**PCT/GB99/02483**

(21) Application number: **99936805.3**

(22) Date of filing: **29.07.1999**

(87) International publication number:
**WO 00/007804 (17.02.2000 Gazette 2000/07)**

(54) **RESIN TRANSFER MOULDING**

TRANSFERGIESSEN VON HARZ

MOULAGE PAR TRANSFERT DE RESINE

(84) Designated Contracting States:
**AT BE CH CY DE DK ES FI FR GB GR IE IT LI LU
MC NL PT SE**

(30) Priority: **31.07.1998   GB 9816794**

(43) Date of publication of application:
**23.05.2001   Bulletin 2001/21**

(73) Proprietor: **CYTEC TECHNOLOGY CORP.
Wilmington, Delaware 19801 (US)**

(72) Inventors:
• **MORTIMER, Stephen
Deeside Clwyd CH5 2AJ (GB)**
• **COPPOCK, Vincent
Bunbury Cheshire CW6 95J (GB)**

(74) Representative: **Bowman, Paul Alan
Lloyd Wise
Commonwealth House,
1-19 New Oxford Street
London WC1A 1LW (GB)**

(56) References cited:
**US-A- 4 578 448          US-A- 5 002 712
US-A- 5 587 034**

## Description

This invention relates to resin transfer moulding and in particular to the use of a furane resin as a matrix in resin transfer moulding.

Composite structures have been employed in the construction of many types of useful articles such as, storage vessels, transportation containers, vehicle parts including cars, trucks, boats, airplanes and trains and the like. The composites comprise fibrous reinforcement e.g. glass fibres, carbon fibres etc., within a cured resin.

Composites may be made by various moulding processes including compression moulding, autoclave moulding and resin transfer moulding. Resin transfer moulding (RTM) involves the impregnation of dry fibres in a mould with low viscosity thermosetting resin. In general the RTM process involves loading dry fibrous reinforcement layers into a mould, closing the mould, introducing a low viscosity thermosetting matrix resin in to the mould and curing the resin, typically via the application of heat.

The fibrous reinforcement layers are generally loaded into the mould in the form of a preform. A preform is typically composed of multiple layers of fibrous material which are cut and assembled with the desired fibre orientation to form the required shape and then stabilised to allow handling and prevent disturbance during the moulding. Methods of stabilisation include stitching, weaving, braiding, stapling and bonding using binders. The use of chemical, powder or film binders, particularly chemical binders based on thermosetting resins, is convenient for the production of the preform although it may detract from the cured mechanical performance of the thermosetting matrix resin systems used to produce the composites via resin transfer moulding. Examples of preform production moulds, chemical binders, and resin transfer moulding techniques are disclosed in US-A-4992228, 5009821, 5080857 and 5427725, and GB 1475718.

The thermosetting resins used as the matrix resin in RTM must have low viscosity under the moulding conditions to facilitate injection into the mould and to ensure penetration and wetting of the fibres of the fibrous reinforcement. A variety of thermosetting resin systems have been used for RTM including bismaleimide resins, cyanate resins, epoxy resins, phenolic resins and polyester resins.

Furane resin has been used in the preparation of carbon fibre reinforced materials as disclosed in JP 3249268A, JP 5051257A and JP 5254936. Furane resin has been used in the manufacture of a carbon-glass composite involving carbonising a moulded intermediate at a temperature in the range 200 to 1700°C. Heretofore furane resin has not been suggested for use as a matrix resin in resin transfer moulding.

US-A-5002712 discloses a process for the manufacture of continuous moulded bodies from structures of reinforcing fibres impregnated with thermoplastics, comprising the steps of:

> (a) introducing the structure into a pressure chamber; and
> (b) impregnating the structure with thermoplastic in the pressure chamber at a pressure of 1 to 800 bar for a length of at least 300mm.

The thermoplastic may be selected from a wide range of materials, including furane resin precursors. The resin systems may be cross-linked.

US-A-4578448 discloses high-ortho phenol-formaldehyde resoles having stable hemiformal groups. These resoles are of low viscosity, are essentially free of unbound water and volatile organic compounds. They are curable to phenolic formaldehyde resinous solids and are particularly suitable for use in liquid injection moulding processes to form composites. The liquid phenolic compositions can be used as thermosetting compositions by curing through the addition of a catalyst and heat. The catalysts can either be an acid or a base depending on the cure rate required for the fabrication technique and formulations chosen. In general, all those catalysts which are commonly employed for the cure of phenol-formaldehyde resins are suitable to cure the high ortho hemiformal containing resins. Typical acid catalysts are sulfuric acid, sulfonic acids such as phenolsulfonic acid, oxalic acid, and boron trifluoride.

US-A-5587034 discloses a pultrusion process for preparing fibre reinforced furane resin composites by drawing a plurality of continuous filaments through an impregnating bath of liquid furane to wet-out the filaments with the resin and a squeeze orifice for removal of excess resin and air, and continuously pulling the resin-impregnated filament through a pultrusion die to heat and cure the resin. The liquid furane resin contains a furfuryl alcohol prepolymer and a minor portion of an acid catalyst, for example, p-toluene sulfonic acid, maleic anhydride and phosphoric acid and is maintained at a temperature of 15° to 35°C and has a viscosity of 500 to 3000 cps during the impregnation step. A postcuring treatment may be optionally employed.

It is an object of the present invention to provide an alternative resin system for use in resin transfer moulding.

According to the present invention there is provided a resin transfer moulding process characterised in that the matrix resin composition used comprises a furane resin and a catalyst selected from a Lewis acid catalyst and/or a weak acid salt.

The term furane resin is used to define a family of thermosetting polymers derived from various combinations of furane ring containing precursors. These resins are characterised by their dark colour, low viscosity, and ability to cure rapidly at ambient or elevated temperature in the presence of acidic catalysts.

The two intermediates of commercial furane resins are furfural and furfuryl alcohol. Furfural is a colourless liquid that darkens upon exposure to air and has a boiling point of 161.7°C. Catalytic hydrogenation of furfural leads to furfuryl alcohol which is the major intermediate of furane resins. Furfuryl alcohol is a mobile liquid, light in colour and has a boiling point of 170°C. It is highly reactive under certain conditions and will resinify in the presence of acid or high temperatures. Resinification is believed to involve an initial condensation reaction of furfuryl alcohol with the elimination of water. Thereafter, curing involves double bond addition polymerisation as there is a loss of unsaturation during cross-linking.

Due to their favourable chemical resistance, flame resistance, dimensional stability and high elevated temperature properties, furane resins have found use in corrosion resistant coatings, chemically resistant flooring, foundry mouldings, mortars and binders in the manufacture of grinding wheels. However, furane resins have not been considered as potential resin systems for prepregs or adhesive films largely due to the fact they have an unpleasant odour. While the odour can be altered by the addition of fragrances, it still remains unpleasant and is unsuitable for use in situations where workers will be repeatedly exposed to the resin, e.g. the production of prepregs. Also, the original catalyst systems proposed for use with furane resins were usually strongly acidic and gave a highly exothermic cure. Thus in laminates containing a low fibre content, there was concern there would be insufficient fibre to act as a heat sink and absorb the heat generated by the exothermic reaction. The water formed in the condensation polymerisation reaction would be heated well above its boiling point, consequently resulting in a foamed laminate.

It has been found that in spite of the perceived drawbacks, furane resins may be successfully used as matrix resins in resin transfer moulding. Unlike prepregs and adhesive film processes, the resin transfer moulding process is closed and therefore with the selection of suitable equipment the potential odour problem is not an issue. Also, by suitable selection of catalyst from a Lewis acid and/or a weak acid salt it is possible to obtain a resin system which has a good shelf life, has a low viscosity at moderate temperature and will polymerise and cure at 60°C or higher temperatures.

It has been found that Lewis acid catalysts, such as, boron-trifluoride complexes, provide good latency properties allowing a shelf life of several days and rapid curing at temperatures above 60°C. The resins system may be used in RTM to manufacture composite structures having good mechanical performance and favourable flame, smoke and toxicity characteristics in a fire situation. The composite structures find particular utility in aircraft, train and building interiors. The furane resins used in the invention lead to lower water formation compared to phenolic resins which are widely used for production of such composite structures.

The furane resins used in the invention are known. Suitable resins include resin RP100A commercially available from Quaker Oats and D771 Furane commercially available from Borden Chemicals.

Preferred catalysts used in the invention are Lewis acid catalysts. Such catalysts are an amine-Lewis acid complexes or the corresponding salts thereof. Examples of such catalysts include amine boron trifluoride complexes, amine tetrafluoroborate salts, amine boron trichloride complexes, amine tetrachloroborate salts, amine arsenic pentafluoride complexes, amine hexafluoroarsenate salts, amine phosphorus pentafluoride complexes, amine hexafluorophosphate salts. The amine may be a primary or secondary amine. Suitable amines include ethylamine, aniline, 2,4-dimethyl aniline, 2,6-diethylaniline, furfurylamine di-sec-butyl amine, diisopropylamine and diethylamine etc. Primary amines are preferred.

Exemplary catalysts include boron trifluoridemonoethylamine complexes commercially available from Shell under the trade name SHELL EPIKURE BF$_3$:400 and Ciba under the trade designation HT973, boron trichloride amine complexes such as the catalyst commercially available from Ciba under the trade designation DY9577, borontrifluoride-2,4-dimethylaniline complex commercially available from Laborchem Apolada and boron trifluoridefurfurylamine complex commercially available under the trade name LEECURE B550 from Leepoxy.

Other suitable catalysts include weak acid salts which dissociate at elevated temperature to give the required pH for curing, which is generally less than 4.0. The ratio of resin to catalyst depends upon the particular selection of each component but generally 5 to 15 parts, preferably about 8 parts by weight of catalyst are employed per 100 parts by weight of resin.

The resin composition may additionally comprise one or more additives selected from liquid flame retardants, colourants, wetting agents, stabilisers, surfactants, mould release agents etc. Preferred additives include Amgard CU, a liquid phosphate ester flame retardant commercially available from Albright and Wilson. The total content of additives is less than 25% by weight of the resin composition, preferably about 10% by weight.

The presence of a liquid flame retardant is particularly advantageous. In addition to significantly improving the flammability characteristics of the resulting composite liquid flame retardants are often good solvents for the catalyst which facilitates preparation of a homogenous resin formulation. Many of the catalysts are sparingly soluble in furane resins.

The furane resin may be used in conventional resin transfer moulding equipment. The furane resin may be stored in a reservoir at ambient temperature and injected into a mould containing the fibrous reinforcement. The mould is generally heated to a temperature in the range 60 to 90° and maintained within the temperature range until cured sufficiently for demoulding. After demoulding the resulting composite may be subjected to a postcure heating stage at higher temperature e.g. 150°C.

The furane matrix resin is compatible with the binder resins disclosed in our co-pending PCT Application No. GB98/01268 which are employed to prepare preforms for resin transfer moulding. The application discloses binder coated fibres comprising from 80 to 99% by weight reinforcing fibres and from 1 to 20% by weight of a preform binder resin, said binder resin being in the form of particles or discrete areas on the surface of the reinforcing fibres, said binder resin comprising:

from 40 to 90% by weight of the binder resin of a thermosetting resin and

from 10 to 60% by weight of the binder resin of a high molecular weight engineering thermoplastic and/or an elastomer selected from vinyl addition polymer, fluoroelastomers and polysiloxane elastomers

the engineering thermoplastic/elastomer being dissolved in the thermosetting resin, the binder resin being non-tacky at ambient temperature, having a softening point in the range 50 to 150°C and being heat curable at a temperature in the range 50 to 200°C.

The thermosetting resin is generally selected from bismaleimide resins, cyanate resins and epoxy resins and the engineering thermoplastic generally has a Tg of at least 150°C and is generally selected from polyimide, polyetherimide, polyethersulfone, polysulfone, polyetherketone, polyetheretherketone, polyamide, polyamideimide and phenoxy resin.

A stabilised preform may be prepared by forming layers of the binder coated fibres over a moulded surface and heating the layers to a temperature in the range 50 to 150°C to melt the binder resin and fuse the layers together and cooling to rigidify the layers to form a preform. Thereafter the preform is placed in a resin transfer mould and a thermosetting matrix resin introduced and cured at a temperature of from 50 to 200°C to form a composite.

The furane matrix resins when used with such preforms, particularly preforms made using a polyetherimide modified bismaleimide binder, provide composites having improved mechanical properties e.g. toughness, flexural strength and flexural modulus.

The furane matrix resin is also compatible with a wide range of other curable and non-curable binders used to prepare preforms and may be used with such preforms.

The invention will now be illustrated by the following Examples.

Example 1

The following resin formulation was prepared:

|  | Parts by Weight |
|---|---|
| D771 Furane resin (Borden UK) | 100 |
| HT973 (Ciba) | 8 |
| Amguard CU (Albright & Wilson) | 10 |

The HT973 was dissolved in the Amguard CU flame retardant to form a free flowing liquid which was easily dispersed in the furane resin. The formulation was stable at ambient temperature, suitable for Resin Transfer Moulding, and cured at temperatures above 60°C.

Example 2

Preparation of a laminate of carbon fibre and the resin of the invention by Resin Transfer Moulding.

1kg of the resin formulation of Example 1 at ambient temperature was drawn into the homogeniser of a Plastech Hyperjet RTM pump. The resin was then injected into 300 x 500 x 3mm mould cavity preheated to 85°C containing 12 plies of 3KHS Plain Weave carbon fabric and cured for 3 hours at 85°C. The fibre volume of the composite was approximately 45%.

The cured composite part was then postcured in an oven for 1 hour at 150°C.

Example 3 - Flammability Testing

a) Vertical Burn Testing

Samples for vertical burn testing were cut from the laminate of Example 2 and tested according to Test Method FAR/JAR 25.853a. The pass criteria for this testis <15 seconds. The samples of the invention were self extinguishing in a time of zero seconds.

b) Smoke Emission Testing

Samples for smoke emission testing were cut from the laminate of Example 2 and tested according to Test Method FAR : 2-66. The pass criteria for this test is a smoke density of <150. An average value of smoke density of 63 was obtained for the samples of the invention.

Example 4 - Mechanical Data Generation

The following data were generated by testing samples from the laminate of Example 2.

Flexural Strength = 572.2MPa - Test Method ASTM D790

Flexural Modulus = 37.2GPa - Test Method ASTM D790

Interlaminar Shear Strength = 47.2MPa - Test Method ASTM D2344

These results are comparable to those obtained with commercially available phenolic resin systems and are more than adequate for flame retardant interior applications.

Example 5

A preform was prepared from 290g/m$^2$ glass fabric (weave style 7781) coated with particles of a polyetherimide-modified bismaleimide binder as disclosed in Example 1 of International Patent Application No. GB98/01268 (25% by weight PEI (General Electric Ultem 1000) and 75% by weight bismaleimide resin (Cytec 5250-4 RTM resin)). The binder weight was 4% by weight of the glass fabric. The binder coated fabric was placed in a closed mould and heated to 80°C to form a preform.

The furane resin of Example 1 (held at room temperature) was injected into the mould which was held at 80°C for four hours prior to demoulding.

Samples were postcured for 1 hour at 150°C. The resultant composite laminate had a resin content of about 40% by weight.

Additional samples were prepared from the same glass fabric without the preform binder.

Mechanical properties of the samples were measured and are reported in the following Table.

| | no binder without postcuring | no binder with postcuring | with binder and postcuring |
|---|---|---|---|
| Bending strength at room temperature/MPa | 207 | - | 226 |
| Bending E-Modulus/MPa | 15500 | - | 17272 |
| Bending strength at 80°C/ MPa | 25 | 103 | 173 |
| Bending E-Modulus/MPa | 2400 | 9374 | 14065 |
| - = not measured. | | | |

The results demonstrate the postcuring step improves mechanical properties of the composite and the use of a preform binder provides a further significant improvement. The composites obtained with preform binder have mechanical properties comparable to composites prepared from commercially available prepregs using phenolic resins.

**Claims**

1. A resin transfer moulding process **characterised in that** the matrix resin composition used comprises a furane resin and a catalyst selected from a Lewis acid catalyst and/or a weak acid salt.

2. A resin transfer moulding process as claimed in Claim 1 in which the Lewis acid catalyst is selected from the group consisting of amine boron trifluoride complexes, amine tetrafluoroborate salts, amine boron trichloride complexes, amine tetrachloroborate salts, amine arsenic pentafluoride complexes, amine hexafluoroarsenate salts, amine phosphorus pentafluoride complexes and amine hexafluorophosphate salts.

3. A resin transfer moulding process as claimed in Claim 2 in which the amine is selected from the group consisting of ethylamine, aniline, 2,4-dimethylaniline, 2,6-diethylaniline, furfurylamine, di-sec-butylamine, isopropylamine and diethylamine.

4. A resin transfer moulding process as claimed in Claim 2 of Claim 3 in which the catalyst is a boron trifluoride-amine complex.

5. A resin transfer moulding process as claimed in Claim 4 in which the boron trifluoride complex is a boron trifluoride-monethylamine complex.

6. A resin transfer moulding process as claimed in any preceding Claim in which the catalyst is present in an amount sufficient to maintain a pH of 4.0 or less.

7. A resin transfer moulding process as claimed in any preceding Claim in which the matrix resin composition comprises 100 parts by weight of furane resin and 5 to 10 parts by weight of catalyst.

8. A resin transfer moulding as claimed in Claim 7 in which the matrix resin composition comprises 100 parts by weight of furane resin and about 8 parts by weight of catalyst.

9. A resin transfer moulding process as claimed in any preceding claim in which the matrix resin composition additionally comprises one or more additives selected from liquid flame retardants, colourants, wetting agents, surfactants, stabilisers and mould release agents.

10. A resin transfer moulding process as claimed in Claim 9 in which the additive(s) are present in a total amount not exceeding 25% by weight of the matrix resin formulation.

11. A resin transfer moulding process as claimed in Claims 9 or 10 in which the matrix resin composition comprises a liquid phosphate ester flame retardant.

12. A resin transfer moulding process as claimed in Claim 11 in which the matrix resin composition comprises 100 parts by weight of furane resin and about 10 parts by weight of liquid phosphate ester flame retardant.

13. A resin transfer moulding process as claimed in any preceding Claim comprising the steps of:

    (a) introducing dry fibrous reinforcement into a mould,
    (b) closing the mould,
    (c) injecting the matrix resin and catalyst into the mould and
    (d) curing the matrix resin.

14. A resin transfer moulding process as claimed in any one of Claims 1 to 12 comprising the steps of:

    (a) introducing a preform comprising bonded fibrous reinforcement into a mould,
    (b) closing the mould,
    (c) injecting a furane resin and catalyst into the mould and
    (d) curing the furane resin.

**15.** A resin transfer moulding process as claimed in Claim 14 in which the preform is made from binder coated fibres comprising from 80 to 99% by weight reinforcing fibres and from 1 to 20% by weight of a preform binder resin, said binder resin being in the form of particles or discrete areas on the surface of the reinforcing fibres, said binder resin comprising:

from 40 to 90% by weight of the binder resin of a thermosetting resin and
from 10 to 60% by weight of the binder resin of a high molecular weight engineering thermoplastic and/or an elastomer selected from vinyl addition polymer, fluoroelastomers and polysiloxane elastomers
the engineering thermoplastic/elastomer being dissolved in the thermosetting resin, the binder resin being non-tacky at ambient temperature, having a softening point in the range 50 to 150°C and being heat curable at a temperature in the range 50 to 200°C.

**16.** A resin transfer moulding as claimed in Claim 15 in which the thermosetting resin is selected from bismaleimide resins, cyanate resin and epoxy resins and the engineering thermoplastic and is selected from polyimide, polyetherimide, polyethersulfone, polysulfone, polyetherketone, polyetheretherketone, polyamide, polyamideimide and phenoxy resin.

**17.** A resin transfer moulding as claimed in Claim 16 in which the binder resin is a polyetherimide-modified bismaleimide resin.

**18.** A resin transfer moulding processed as claimed in any preceding Claim in which the curing is effected by heating to a temperature of at least 60°C.

**19.** A resin transfer moulding process as claimed in Claim 18 in which the curing is effected by heating to a temperature in the range 60 to 90°C.

**20.** A resin transfer moulding process as claimed in any preceding step which additionally comprises a postcure heating step.

**21.** A resin transfer moulding process as claimed in any preceding claim in which the furane resin comprises a polymer of furfuryl alcohol.

**Patentansprüche**

**1.** Harzspritzpressverfahren, **dadurch gekennzeichnet, dass** die eingesetzte Harzgrundmassenmischung ein Furanharz und einen Katalysator umfasst, der unter einem Lewis-Säure-Katalysator und/oder einem schwach sauren Salz ausgewählt wird.

**2.** Harzspritzpressverfahren gemäß Anspruch 1, in welchem der Lewis-Säure-Katalysator aus einer Gruppe ausgewählt wird, bestehend aus Trifluor-Bor-Amin-Komplexen, Tetrafluoroborat-Amin-Salzen, Trichlor-Bor-Amin-Komplexen, Amin-Tetrachloroborat-Salzen, Pentafluor-Arsen-Amin-Komplexen, Hexafluoroarsenat-Amin-Salzen, Pentafluorid-Phosphor-Amin-Komplexen und Hexafluorophosphat-Amin-Salzen.

**3.** Harzspritzpressverfahren gemäß Anspruch 2, in welchem das Amin aus einer Gruppe ausgewählt wird, bestehend aus Ethylamin, Anilin, 2,4-Dimethylanilin, 2, 6-Diethylanilin, Furfurylamin, Di-sec-butylamin, Isopropylamin und Diethylamin.

**4.** Harzspritzpressverfahren gemäß Anspruch 2 oder Anspruch 3, in welchem der Katalysator ein Trifluor-Bor-Amin-Komplex ist.

**5.** Harzspritzpressverfahren gemäß Anspruch 4, in welchem der Trifluor-Bor-Komplex ein Trifluor-Bor-Monethylamin-Komplex ist.

**6.** Harzspritzpressverfahren gemäß einem der vorangehenden Ansprüche, in welchem der Katalysator in einer Menge vorhanden ist, die ausreicht, um einen pH-Wert von 4,0 oder weniger zu erhalten.

**7.** Harzspritzpressverfahren gemäß einem der vorangehenden Ansprüche, in welchem die Harzgrundmassenmischung 100 Gewichtsteile an Furanharz und 5 bis 10 Gewichtsteile an Katalysator umfasst.

8. Harzspritzpressverfahren gemäß Anspruch 7, in welchem die Harzgrundmassenmischung 100 Gewichtsteile an Furanharz und ungefähr 8 Gewichtsteile an Katalysator umfasst.

9. Harzspritzpressverfahren gemäß einem der vorangehenden Ansprüche, in welchem die Harzgrundmassenmischung zusätzlich einen oder mehrere Zusatzstoffe umfasst, die unter flüssigen Flammhemmungsmitteln, Färbemitteln, Benetzungsmitteln, grenzflächenaktiven Mitteln, Stabilisatoren und Formtrennmitteln ausgewählt werden.

10. Harzspritzpressverfahren gemäß Anspruch 9, in welchem der(die) Zusatzstoff(e) in einer Gesamtmenge vorhanden sind, die 25 Gewichts-% des Ansatzes der Harzgrundmassenmischung nicht überschreitet.

11. Harzspritzpressverfahren gemäß Anspruch 9 oder 10, in welchem die Harzgrundmassenmischung ein flüssiges Flammhemmungsmittel aus Phosphorsäureester umfasst.

12. Harzspritzpressverfahren gemäß Anspruch 11, in welchem die Harzgrundmassenmischung 100 Gewichtsteile an Furanharz und ungefähr 10 Gewichtsteile an flüssigem Flammhemmungsmittel aus Phosphorsäureester umfasst.

13. Harzspritzpressverfahren gemäß einem der vorangehenden Ansprüche, umfassend die Schritte:

    (a) Einlegen einer trockenen Faserverstärkung in eine Form;

    (b) Verschließen der Form;

    (c) Einspritzen der Harzgrundmassenmischung mit Katalysator in die Form; und

    (d) Aushärten der Harzgrundmassenmischung.

14. Harzspritzpressverfahren gemäß einem der Ansprüche 1 bis 12, umfassend die Schritte:

    (a) Einlegen eines Vorformlings, der eine gebondete Faserverstärkung umfasst, in eine Form;

    (b) Verschließen der Form;

    (c) Einspritzen eines Furanharzes mit Katalysator in die Form; und

    (d) Aushärten des Furanharzes.

15. Harzspritzpressverfahren gemäß Anspruch 14, in welchem der Vorformling aus mit Bindemittel beschichteten Fasern hergestellt ist, der von 80 bis 99 Gewichts-% aus Verstärkungsfasern und von 1 bis 20 Gewichts-% aus einem Verbindungsharz für Vorformlinge besteht, wobei das Verbindungsharz in der Form von Partikeln oder begrenzten Flächen auf der Oberfläche der verstärkenden Fasern vorhanden ist, und wobei das Verbindungsharz umfasst:

    von 40 bis 90 Gewichtsprozent des Verbindungsharzes aus einem hitzehärtbaren Harz und
    von 10 bis 60 Gewichtsprozent des Verbindungsharzes aus einem technischen Thermoplast mit hohem Molekulargewicht und/oder einem Elastomer, das unter einem Polymer mit Vinylzugabe, unter Fluoroelastomeren und Polysiloxan-Elastomeren ausgewählt wird,

    wobei das(der) technische Thermoplast/Elastomer in einem hitzehärtbaren Harz aufgelöst ist, wobei das Verbindungsharz bei Umgebungstemperatur nicht klebrig ist, einen Erweichungspunkt im Bereich von 50 bis 150 °C aufweist und bei einer Temperatur im Bereich von 50 bis 200 °C hitzeaushärtbar ist.

16. Harzspritzpressverfahren gemäß Anspruch 15, in welchem das hitzehärtbare Harz unter Bismaleinimid-Harzen, Cyanat-Harz und Epoxy-Harzen ausgewählt wird und der technische Thermoplast unter Polyimid, Polyetherimid, Polyethersulfon, Polysulfon, Polyetherketon, Polyetheretherketon, Polyamid, Polyamidoimid und Phenoxy-Harz ausgewählt wird.

17. Harzspritzpressverfahren gemäß Anspruch 16, in welchem das Verbindungsharz ein Polyetherimidmodifiziertes Bismaleinimid-Harz ist.

18. Harzspritzpressverfahren gemäß einem vorangehenden Anspruch, in welchem das Aushärten durch Erwärmen auf eine Temperatur von zumindest 60 °C bewirkt wird.

19. Harzspritzpressverfahren gemäß Anspruch 18, in welchem das Aushärten durch Erwärmen auf eine Temperatur im Bereich von 60 bis 90 °C bewirkt wird.

20. Harzspritzpressverfahren gemäß einem vorangehenden Anspruch, welches zusätzlich einen Erwärmungsschritt nach dem Aushärten umfasst.

21. Harzspritzpressverfahren gemäß einem vorangehenden Anspruch, in welchem das Furanharz ein Polymer aus Furfurylalkohol umfasst.

**Revendications**

1. Procédé de moulage par transfert de résine **caractérisé en ce que** la composition résineuse pour matrice employée comprend une résine dérivée de furanne et un catalyseur choisi parmi un catalyseur de type acide de Lewis et/ou un sel d'acide faible.

2. Procédé de moulage par transfert de résine tel que revendiqué dans la revendication 1, dans lequel le catalyseur de type acide de Lewis est choisi parmi les complexes d'amine et de trifluorure de bore, les sels de type tétrafluoroborate d'amine, les complexes d'amine et de trichlorure de bore, les sels de type tétrachloroborate d'amine, les complexes d'amine et de pentafluorure d'arsenic, les sels de type hexafluoroarséniate d'amine, les complexes d'amine et de pentafluorure de phosphore et les sels de type hexafluorophosphate d'amine.

3. Procédé de moulage par transfert de résine tel que revendiqué dans la revendication 2, dans lequel l'amine est choisie parmi l'éthylamine, l'aniline, la 2,4-diméthylaniline, la 2,6-diéthylaniline, la furfurylamine, la di-sec-butylamine, l'isopropylamine et la diéthylamine.

4. Procédé de moulage par transfert de résine tel que revendiqué dans la revendication 2 ou 3, dans lequel le catalyseur est un complexe de trifluorure de bore et d'amine.

5. Procédé de moulage par transfert de résine tel que revendiqué dans la revendication 4, dans lequel le complexe de trifluorure de bore est un complexe de trifluorure de bore et de monoéthylamine.

6. Procédé de moulage par transfert de résine tel que revendiqué dans l'une quelconque des revendications précédentes, dans lequel le catalyseur est présent selon une quantité suffisante pour maintenir un pH de 4,0 ou moins.

7. Procédé de moulage par transfert de résine tel que revendiqué dans l'une quelconque des revendications précédentes, dans lequel la composition résineuse pour matrice comprend 100 parties en poids de résine dérivée de furanne et de 5 à 10 parties en poids de catalyseur.

8. Procédé de moulage par transfert de résine tel que revendiqué dans la revendication 7, dans lequel la composition résineuse pour matrice comprend 100 parties en poids de résine dérivée de furanne et environ 8 parties en poids de catalyseur.

9. Procédé de moulage par transfert de résine tel que revendiqué dans l'une quelconque des revendications précédentes, dans lequel la composition résineuse pour matrice comprend en outre un ou plusieurs additifs choisis parmi les agents liquides retardateurs d'inflammation, les colorants, les agents mouillants, les tensioactifs, les stabilisants et les agents de démoulage.

10. Procédé de moulage par transfert de résine tel que revendiqué dans la revendication 9, dans lequel ou les additifs sont présents selon une quantité totale non supérieure à 25 % en poids de la composition résineuse pour matrice.

11. Procédé de moulage par transfert de résine tel que revendiqué dans la revendication 9 ou 10, dans lequel la composition résineuse pour matrice comprend un agent liquide retardateur d'inflammation à base d'ester de type phosphate.

**12.** Procédé de moulage par transfert de résine tel que revendiqué dans la revendication 11, dans lequel la composition résineuse pour matrice comprend 100 parties en poids de résine dérivée de furanne et environ 10 parties en poids d'agent liquide retardateur d'inflammation à base d'ester de type phosphate.

**13.** Procédé de moulage par transfert de résine tel que revendiqué dans l'une quelconque des revendications précédentes, comprenant les étapes consistant à :

(a) introduire une armature fibreuse sèche dans un moule,
(b) fermer le moule,
(c) injecter la résine pour matrice et le catalyseur dans le moule, et
(d) durcir la résine pour matrice.

**14.** Procédé de moulage par transfert de résine tel que revendiqué dans l'une quelconque des revendications 1 à 12, comprenant les étapes consistant à :

(a) introduire une ébauche comprenant une armature fibreuse liée dans un moule,
(b) fermer le moule,
(c) injecter une résine dérivée de furanne et un catalyseur dans le moule, et
(d) durcir la résine dérivée de furanne.

**15.** Procédé de moulage par transfert de résine tel que revendiqué dans la revendication 14, dans lequel l'ébauche est constituée de fibres revêtues d'un liant comprenant de 80 à 99 % en poids de fibres de renforcement et de 1 à 20 % en poids d'une résine liante pour ébauche, ladite résine liante étant sous forme de particules ou de zones discrètes sur la surface des fibres de renforcement, ladite résine liante comprenant :

de 40 à 90 % en poids par rapport à la résine liante, d'une résine thermodurcissable, et
de 10 à 60 % en poids par rapport à la résine liante, d'une matière thermoplastique technique de poids moléculaire élevé et/ou d'un élastomère choisi parmi un polymère d'addition à groupe vinyle, les fluoroélastomères et les élastomères de type polysiloxane, la matière thermoplastique technique et/ou l'élastomère étant dissous dans la résine thermodurcissable, et la résine liante étant non adhésive à la température ambiante, ayant un point de ramollissement de 50 à 150 °C et étant thermodurcissable à une température de 50 à 200 °C.

**16.** Procédé de moulage par transfert de résine tel que revendiqué dans la revendication 15, dans lequel la résine thermodurcissable est choisie parmi les résines dérivées de bismaléimide, une résine de type cyanate et les résines époxy, et la matière thermoplastique technique est choisie parmi un polyimide, un polyétherimide, une polyéthersulfone, une polysulfone, une polyéthercétone, une polyétheréthercétone, un polyamide, un polyamideimide et une résine à groupe phénoxy.

**17.** Procédé de moulage par transfert de résine tel que revendiqué dans la revendication 16, dans lequel la résine liante est une résine dérivée de bismaléimide modifiée par polyétherimide.

**18.** Procédé de moulage par transfert de résine tel que revendiqué dans l'une quelconque des revendications précédentes, dans lequel le durcissement est effectué par chauffage à une température d'au moins 60 °C.

**19.** Procédé de moulage par transfert de résine tel que revendiqué dans la revendication 18, dans lequel le durcissement est effectué par chauffage à une température de 60 à 90 °C.

**20.** Procédé de moulage par transfert de résine tel que revendiqué dans l'une des revendications précédentes, comprenant en outre une étape de chauffage de post-durcissement.

**21.** Procédé de moulage par transfert de résine tel que revendiqué dans l'une quelconque des revendications précédentes, dans lequel la résine dérivée de furanne comprend un polymère d'alcool furfurylique.